# FASCICULE DE BREVET EUROPEEN

(11) **EP 2 248 749 B1**
(45) Date de publication et mention de la délivrance du brevet: **22.08.2012**
(21) Numéro de dépôt: 10290240.0
(22) Date de dépôt: 04.05.2010
(51) Int. Cl.: B65H 20/20, B29C 51/26

(54) **Dispositif de convoyage d'une bande le long d'une ligne de fabrication et ligne de fabrication munie d'un tel dispositif**
Vorrichtung zum Fördern eines Bandes entlang einer Produktionslinie, und mit einer solchen Vorrichtung ausgestattete Produktionslinie
Device for conveying a strip along a manufacturing line and manufacturing line provided with such a device

(30) Priorité: 06.05.2009 FR 0902182
(43) Date de publication de la demande: 10.11.2010
(73) Titulaire: A.R.C.I.L., 95650 Puiseux Pontoise (FR)
(72) Inventeur: Chauvet, Guy, 78600 Maisons Lafitte (FR)
(74) Mandataire: Corret, Hélène

(56) Documents cités:
- DE-A1- 3 637 312
- FR-A- 2 429 089
- US-A- 4 196 164
- US-A- 4 962 704

## Description

L'invention concerne un dispositif de convoyage d'une bande le long d'une ligne de fabrication.

L'invention s'applique à tous les domaines pour lesquels une bande doit être convoyée le long d'une ligne de fabrication. Plus particulièrement, l'invention s'applique au domaine de la fabrication de pots alimentaires, par exemple des pots de yaourt.

Dans ce domaine, il est en effet nécessaire de convoyer une bande, le plus souvent en matériau plastique, le long de la ligne de fabrication vers des postes de formage des pots à partir de la bande.

Un dispositif connu de convoyage d'une telle bande comporte un moyen d'appui pour la bande, une ou plusieurs chaînes à maillons dont certains maillons comportent une plaque latérale munie d'un moyen pour entraîner la bande, ainsi qu'un moyen de contre-appui pour plaquer la chaîne contre le moyen d'appui sur lequel la bande est en appui.

Le moyen d'appui est constitué d'un rouleau comportant une rainure circonférentielle. Le moyen d'entraînement de la bande prévu sur certains maillons est formé par un picot disposé au centre du maillon. Le moyen de contre-appui est constitué d'une enclume présentant ainsi une face plane sur laquelle le maillon vient s'appuyer.

Lorsqu'une bande est amenée entre le rouleau et les chaînes à maillons, les picots pénètrent dans la bande au fur et à mesure que celle-ci défile. La pénétration des picots dans la bande est aidée par l'enclume qui plaque la chaîne contre le rouleau, les picots pénétrant dans la bande et s'insérant alors dans la rainure prévue dans le rouleau.

Le dispositif comporte généralement deux chaînes à picots disposées de part et d'autre du rouleau afin que chaque côté de la bande soit entraîné par les picots.

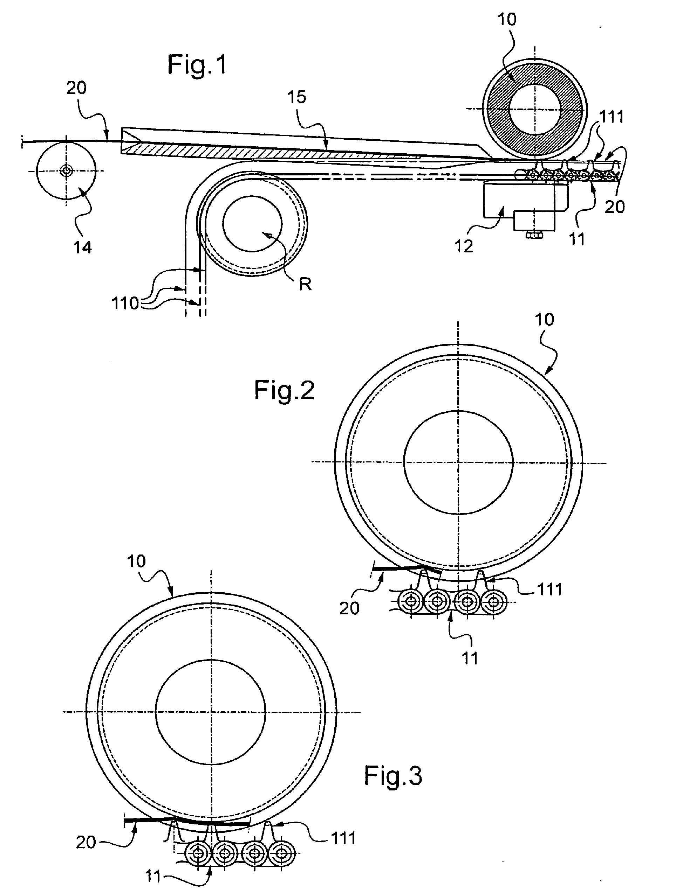

Un dispositif connu tel que décrit ci-dessus est par exemple représenté sur les figures 1 à 3. La figure 1 est un schéma représentant, selon une vue de côté, un dispositif pour convoyer une bande selon l'art antérieur. Les figures 2 et 3 représentent des vues agrandies du dispositif de la figure 1 au niveau de la zone de pénétration des picots dans la bande à convoyer, ces figures illustrant deux positions de la bande par rapport à la chaîne.

Sur ces figures 1 à 3, on distingue la bande 20 à convoyer, le rouleau 10 formant moyen d'appui de la bande 20, la chaîne à maillons 11 à picots et l'enclume 12 formant moyen de contre-appui de la chaîne.

Le parcours de la chaîne 11 est représenté par les lignes discontinues 110. La chaîne à maillons 11 est renvoyée entre le rouleau 10 et l'enclume 12 grâce à au moins une roue de renvoi R. La chaîne 11 est ainsi amenée en vis-à-vis de la bande par la roue de renvoi R.

La bande 20 est conduite sensiblement en ligne droite par des moyens référencés 14, 15.

La chaîne 11 rencontre la bande 20 à convoyer le long de la ligne de fabrication au niveau d'une zone de contre-appui où les picots 111 de la chaîne peuvent pénétrer dans la bande 20. Cette zone de contre-appui se situe entre le rouleau 10 et l'enclume 12.

Un tel dispositif est efficace en ce sens où il permet un convoyage effectif de la bande le long de la ligne de fabrication, mais il présente également plusieurs inconvénients.

En premier lieu, ce dispositif comporte de nombreuses pièces pour fonctionner, lesquelles génèrent un encombrement relativement important. En particulier, il prévoit une roue de renvoi R de la chaîne disposée à distance de l'enclume 12 de la chaîne 11. Le fait de disposer la roue de renvoi R à distance de l'enclume 12 permet d'amener la chaîne 11 sensiblement parallèlement à l'enclume et par suite, de disposer les picots 111 perpendiculairement à l'enclume pour faciliter la pénétration des picots 111 dans la bande 20.

En second lieu, ce dispositif met en oeuvre une enclume en tant que moyen de contre-appui de la chaîne, qui forme une pièce d'usure qui doit être régulièrement changée.

La nature et la quantité de pièces impliquées augmente d'autant les temps d'intervention nécessaires au changement ou au réglage de ces pièces.

Enfin, les picots 111 prévus sur les maillons de la chaîne 11 présentent des dimensions non négligeables pour assurer leur bonne pénétration dans la bande, et une quantité de matière importante est donc nécessaire pour les fabriquer.

Un dispositif de convoyage de bande permettant d'atteindre cet objectif comprend :
- un moyen d'appui pour la bande ;
- au moins une chaîne munie de moyens pour entraîner la bande ;
- au moins une roue de renvoi de la chaîne pour amener la chaîne en vis-à-vis de la bande ;
dans lequel la roue de renvoi forme également moyen de contre-appui de la chaîne pour plaquer celle-ci contre le moyen d'appui de sorte que les moyens d'entraînement de la bande puissent pénétrer dans la bande **caractérisé** en ce que, le moyen d'appui présente un axe de rotation, la roue de renvoi étant disposée, par rapport au moyen d'appui, de sorte qu'il existe un décalage d positif, pris selon le sens de défilement de la bande, entre l'axe de rotation de la roue de renvoi et l'axe de rotation du moyen d'appui.

Ce dispositif peut présenter également la caractéristique suivante :
- le moyen d'appui est un rouleau.

Un dispositif alternatif de convoyage de bande permettant également d'atteindre cet objectif comprend :
- un moyen d'appui pour la bande ;
- au moins une chaîne munie de moyens pour entraîner la bande ;

Il existe d'autres dispositifs de convoyage d'une telle bande.

On peut par exemple citer le dispositif divulgué dans le document FR-2 429 089 suivant le préambule de la revendication 1 qui propose une solution plus simple que le dispositif présenté à l'appui des figures 1 à 3.

A cet effet, le dispositif divulgué dans ce document comprend une roue de renvoi qui forme également moyen de contre-appui d'une chaîne munie de maillons pour entraîner la bande afin de plaquer la chaîne contre un moyen d'appui pour la bande, de sorte que les maillons puissent pénétrer dans la bande.

On peut encore citer le dispositif divulgué dans le document US-4 962 704 lequel met en oeuvre une courroie pour entraîner la bande.

Un objectif de l'invention est de proposer un dispositif de convoyage d'une bande permettant d'améliorer l'efficacité de l'entraînement de la bande.
- au moins une roue de renvoi de la chaîne pour amener la chaîne en vis-à-vis de la bande ;
dans lequel la roue de renvoi forme également moyen de contre-appui de la chaîne pour plaquer celle-ci contre le moyen d'appui de sorte que les moyens d'entraînement de la bande puissent pénétrer dans la bande, caractériséet en ce que le moyen d'appui est une plaque comprenant une face incurvée, une première face plane en amont de la face incurvée, et une deuxième face plane en aval de la face incurvée, lesdites faces planes étant inclinées l'une par rapport à l'autre, la roue de renvoi étant disposée, par rapport à la plaque formant moyen d'appui de la bande, de sorte qu'il existe un décalage d positif ou nul, pris selon le sens de défilement de la bande, entre l'axe de rotation de la roue de renvoi et l'axe défini comme étant celui qui est à la fois perpendiculaire à l'axe de rotation de la roue de renvoi et à la ligne de contact entre la face incurvée de la plaque et la face plane située en aval de la face incurvée.

L'un ou l'autre de ces dispositifs peut présenter également l'une au moins des caractéristiques suivantes, prise seule ou en combinaison :
- la roue de renvoi est motorisée ;
- la chaîne à maillons est une chaîne simple, double ou triple ;
- il est prévu une chaîne de part et d'autre du moyen d'appui ;
- la chaîne présente un pas compris entre 5mm et 80mm, le pas étant défini comme la distance séparant les deux axes de rotation d'un maillon de la chaîne ;
- les moyens pour entraîner la bande sont des picots, chaque picot étant excentré au niveau de l'un des deux axes de rotation du maillon de chaîne sur lequel il est monté ;
- les moyens pour entraîner la bande présentent une forme symétrique ;
- les moyens pour entraîner la bande présentent chacun une hauteur inférieure à 10mm.

L'invention propose également une ligne de fabrication de pots alimentaires comprenant un tel dispositif de convoyage d'une bande, par exemple en matière plastique, laquelle est destinée à former lesdits pots.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 4 est une vue agrandie du dispositif selon l'invention, au niveau de la zone de pénétration des picots dans la bande à convoyer par un maillon de chaîne muni d'un picot ;
- la figure 5 est une vue agrandie de la figure 4 ;
- la figure 6 représente une variante de réalisation d'un dispositif conforme à l'invention ;
- la figure 7 représente une chaîne employée dans un dispositif selon l'invention ;
- la figure 8, comprenant les figures 8(a) et 8(b), représente respectivement un maillon, muni d'un picot, de la chaîne de la figure 6 en vue de face et le picot de ce maillon selon une vue de côté.

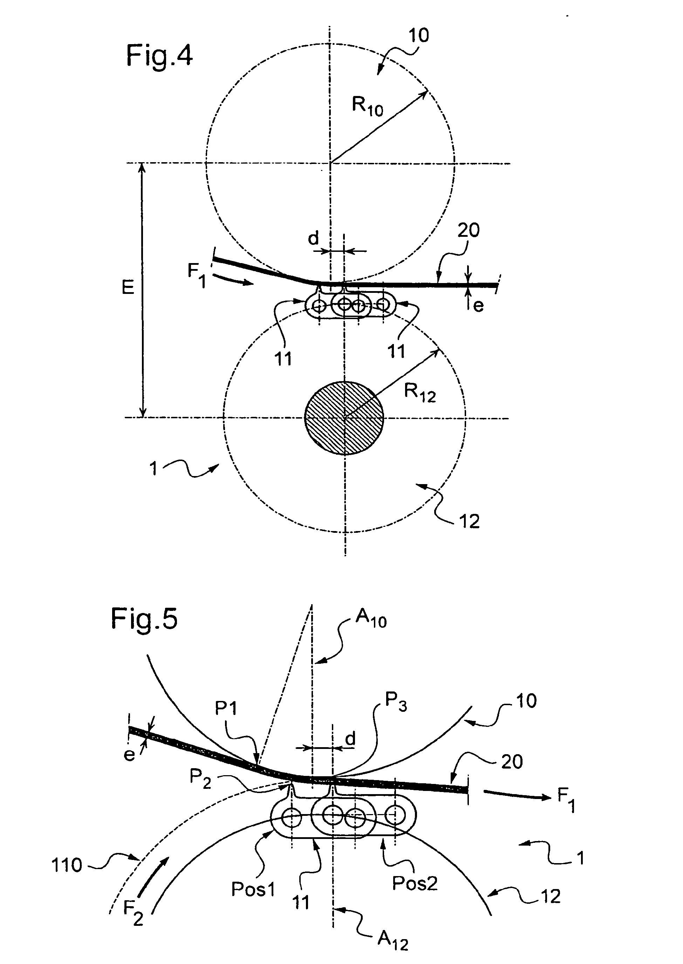

Les figures 4 et 5 représentent un premier mode de réalisation d'un dispositif de convoyage d'une bande conforme à l'invention.

Le dispositif 1 comprend un moyen d'appui 10 de la bande formé d'un rouleau, au moins une chaîne 11 munie de moyens 111 tels que des picots pour entraîner la bande 20, et au moins une roue de renvoi 12 de la chaîne pour amener la chaîne 11 en vis-à-vis de la bande.

La roue de renvoi 12 forme également moyen de contre-appui de la chaîne 11 pour plaquer celle-ci contre le rouleau 10, de sorte que les moyens 111 d'entraînement de la bande 20 puissent pénétrer dans la bande.

La roue de renvoi et le moyen de contre-appui ne forment qu'une seule et même pièce dans le cadre de l'invention. Ceci permet de supprimer une pièce du dispositif de convoyage de la bande et de gagner de la place, aucune roue de renvoi n'étant à distance d'un moyen de contre-appui.

Le rouleau 10 et la roue de renvoi 12 présentent un rayon comparable, mais pas forcément identique. Par exemple, les rayons du rouleau et de la roue de renvoi peuvent être compris entre 90mm et 120mm.

Le fait d'employer la roue de renvoi 12 comme moyen de contre-appui de la chaîne 11 modifie la cinématique de la chaîne 11 par rapport à la bande 20.

Le sens de défilement de la bande 20 est représenté par la flèche F₁, par exemple représentée sur les figures 4 et 5. La bande 20 présente un angle d'amenée sur le rouleau 10 par rapport à l'horizontale qui est non nul. Ainsi, le rouleau 10 vient au contact de la bande 20 en un point P₁ situé en amont, par référence au sens de défilement de la bande 20, d'un axe A₁₀ du rouleau 10, lequel est un axe vertical coupant l'axe de rotation du rouleau 10.

Le sens de défilement de la chaîne 11 est représenté par la flèche F₂. Pour l'entraînement de la chaîne, le dispositif peut prévoir que la roue de renvoi 12 formant moyen de contre-appui soit motorisée.

Le parcours de la pointe d'un picot 111 est référencé 110. Ce parcours se confond avec celui de la bande 20 à partir d'un point de contact P₂ entre le picot 111 et la bande 20. Ce point de contact P₂ est représenté sur la figure 4(b) lorsque le maillon 11 est dans une première position Pos1.

Un décalage d entre les deux axes de rotation, pris selon le sens de parcours F₁ de la bande, de la roue de renvoi 12 et du rouleau 10 est prévu. Ce décalage est illustré sur les figures 4 et 5 comme la distance d séparant d'une part, l'axe vertical A₁₀ coupant l'axe de rotation du rouleau 10 et d'autre part, l'axe vertical A₁₂ coupant l'axe de rotation de la roue de renvoi 12.

Le décalage d tel qu'il est représenté sur les figures 4 et 5 est strictement positif. Cela signifie que, sur son parcours dans le sens de la flèche F₁, un picot 111 de la chaîne va en premier lieu croiser l'axe A₁₀ du rouleau 10, puis l'axe A₁₂ de la roue de renvoi 12.

Le fait que d est strictement positif implique que le point de contact P₂ entre le picot 111 et la bande 20 succède le point de contact P₁ de ladite bande 20 avec le rouleau 10, par référence aux sens de défilement de la bande et/ou de la chaîne. Ainsi, lorsqu'on atteint le point P₂, le picot 111 appuie sur la bande 20 qui est bloquée contre le rouleau 10 et le picot peut transmettre efficacement une force de pénétration dans la bande 20.

On peut envisager que le décalage d soit nul. Dans ce cas, les axes A₁₀ et A₁₂ sont alignés et les points P₁ et P₂ sont confondus.

Toutefois, il est préférable d'éviter que ce décalage soit strictement négatif. En effet, dans ce cas, les picots 111 rencontreraient la bande 20 avant que celle-ci ne soit en contact avec le rouleau 10 et la pénétration d'un picot 111 dans la bande 20 ne serait pas efficace. Pour éviter cette situation, il est possible d'employer des picots de hauteur plus importante. Toutefois, il en résulterait que l'angle d'attaque d'un picot dans la bande s'écarterait de la perpendiculaire, ce qui ne faciliterait pas la pénétration dans la bande et augmenterait les risques de rupture du picot sous l'effet des forces de cisaillement.

Le décalage d peut ainsi être compris entre la valeur nulle et quelques millimètres, et peut dépasser le centimètre.

Au-delà du point de contact P₂ entre le picot 111 et la bande 20, la pénétration du picot dans la bande 20 continue jusqu'à un point P₃. Pour illustrer ce point P₃ sur la figure 4(b), nous avons représenté le même maillon 11 dans une deuxième position Pos2, qui suit la position Pos1 dans le sens de défilement F₂ de la chaîne.

Le point P₃ se situe sur l'axe A₁₂ de la roue de renvoi, et correspond à la position dans laquelle la bande 20 commence à s'écarter du rouleau 10.

Le moyen d'appui 10, la chaîne 11, la bande 20 et la roue de renvoi 12 sont donc au contact entre les points P₂ et P₃. La zone entre ces deux points est appelée zone de contre-appui dans la suite de la description.

Le réglage du dispositif dépend de différents paramètres, à savoir, le décalage d, l'épaisseur e de la bande 20, le rayon R₁₀ du moyen d'appui 10, le rayon R₁₂ de la roue de renvoi 12, l'entraxe E entre le moyen d'appui 10 et la roue de renvoi 12 formant moyen de contre-appui, lesquels sont représentés sur les figures 4 et 5.

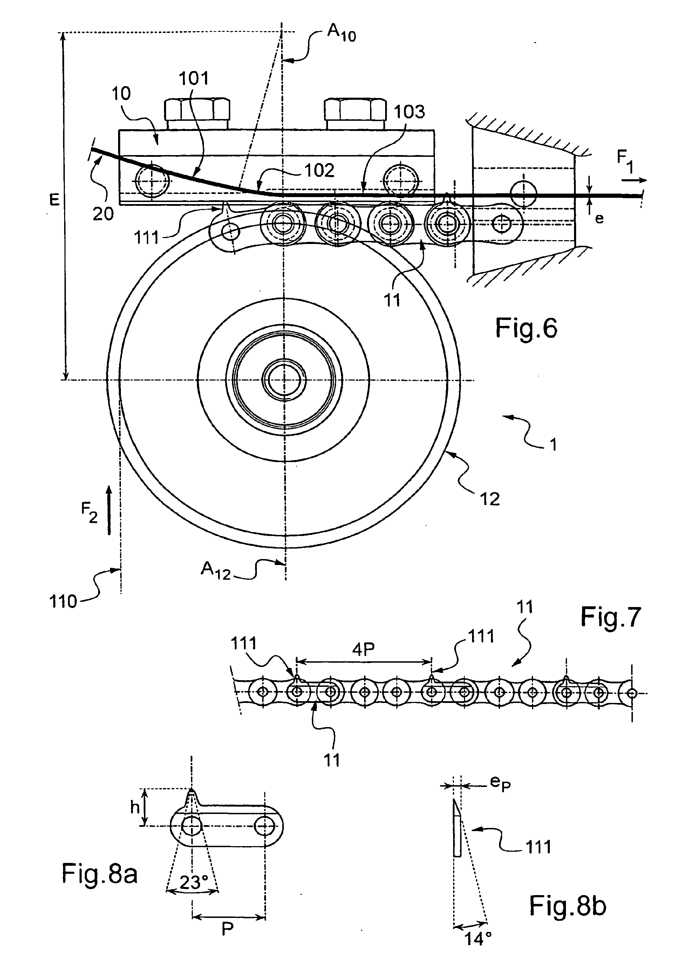

Le réglage du dispositif dépend également du pas P de la chaîne 11 et de la hauteur h dudit d'un moyen d'entraînement 111 de la bande, lesquels sont représentés sur la figure 8(a). En particulier, il faut noter que la hauteur h est définie entre le centre d'un axe de rotation du maillon et la pointe d'un picot.

En pratique, le rayon R₁₀ du moyen d'appui 10, le rayon R₁₂ de la roue de renvoi 12 formant moyen de contre-appui, l'entraxe E entre le moyen d'appui 10 et la roue de renvoi 12, le pas P de la chaîne 11, la hauteur h d'un moyen d'entraînement 111 de la bande sont fixés préalablement lors de la conception et de la fabrication du dispositif.

Aussi, pour régler le dispositif avant sa mise en fonctionnement compte tenu de l'épaisseur de la bande 20 à convoyer, on pourra ajuster la valeur du décalage d pour assurer une bonne pénétration des picots 111 de la chaîne dans la bande 20.

On pourrait prévoir un dispositif pour lequel le paramètre de réglage est différent. Cependant, le décalage d est un paramètre relativement aisé à régler.

La figure 6 représente un deuxième mode de réalisation d'un dispositif conforme à l'invention.

Ce deuxième mode de réalisation se distingue du premier mode de réalisation par le fait qu'il met en oeuvre un moyen d'appui 10 formé d'une plaque présentant trois faces 101, 102, 103 successives de contact avec la bande 20, à la place du rouleau. Les autres pièces constituant le dispositif de ce deuxième mode de réalisation sont les mêmes que celles du premier mode de réalisation.

La première face 101 est plane. La deuxième face 102, en aval de la première face en référence au sens de défilement F₁ de la bande, est incurvée. La troisième face 103, en aval de la deuxième face 102 toujours en référence au sens de défilement F₁ de la bande, est également plane. La première face plane 101 est inclinée par rapport à l'autre face plane 103.

En fonctionnement, la troisième face 103 est généralement disposée dans une position horizontale.

Ainsi, la face inclinée 101 présente un angle d'inclinaison par rapport à l'horizontale qui est comparable avec l'angle d'amenée de la bande 20 sur le rouleau 10 par rapport à l'horizontale dans le premier mode de réalisation. La face incurvée 102 présente quant à elle un rayon de courbure comparable au rayon du rouleau 10 mis en oeuvre dans le premier mode de réalisation.

Ainsi, les contraintes appliquées par la plaque 10 sur la bande 20 sont les mêmes que celles appliquées par le rouleau 10, mis en oeuvre pour le premier mode de réalisation, sur cette bande 20.

Sur le dispositif représenté sur la figure 5, l'axe A₁₂ de la roue de renvoi 12, qui est défini comme précédemment, se confond avec un axe A₁₀.

L'axe A₁₀ est quant à lui défini comme étant l'axe à la fois perpendiculaire à l'axe de rotation de la roue de renvoi 12 formant moyen de contre-appui et à la ligne de contact entre la face incurvée 102 de la plaque 10 et la troisième face 103 de cette plaque 10. Généralement, l'axe A₁₀ sera donc un axe vertical.

Par analogie avec le premier mode de réalisation de l'invention, cela signifie qu'il n'existe pas de décalage d entre la plaque 10 et la roue de renvoi 12. Un tel décalage pourrait cependant être envisagé pour assurer le réglage du dispositif en fonction de l'épaisseur e de la bande 20, en déplaçant par exemple la roue de renvoi 12 formant moyen de contre-appui dans le sens de défilement de la bande 20 (flèche F₁) par rapport à la plaque 10.

On comprend ainsi que le deuxième mode de réalisation est en mesure d'offrir une zone de contre-appui dont l'étendue est au moins égale à celle proposée par le premier mode de réalisation.

Quel que soit le mode de réalisation envisagé, le dispositif met en oeuvre une chaîne à maillons dont certains comprennent un picot judicieusement disposé sur chaque maillon concerné, comme cela est expliqué dans la suite de la description.

Une chaîne 11 susceptible d'être employée est par exemple représentée sur la figure 7.

Cette chaîne 11 est une chaîne simple pour laquelle un picot 111 est présent à intervalles réguliers. Dans le cas d'espèce, l'intervalle entre deux picots représente quatre fois le pas P d'un maillon de la chaîne.

L'intervalle entre deux picots de la chaîne pourrait toutefois être irrégulier et/ou à des fréquences plus ou moins importantes.

La chaîne à maillons 11 pourrait être une chaîne double ou triple, à savoir des chaînes comportant respectivement au moins deux ou trois rangées de maillons.

De plus, bien qu'une seule chaîne soit représentée sur les différentes figures, une chaîne 11 pourra être prévue de part et d'autre du moyen d'appui 10, c'est-à-dire, selon le mode de réalisation envisagé, à chacune des deux extrémités du rouleau 10 ou de la plaque 10.

Un maillon de la chaîne de la figure 7 est représenté sur la figure 8(a). Sur cet exemple donné à titre indicatif, le pas P de la chaîne 11 vaut environ 15.9mm, la hauteur h d'un picot 111 vaut environ 9.45mm, et l'épaisseur ep du picot vaut environ 1.7mm.

Ce maillon comporte un picot 111, présentant de préférence une forme symétrique, excentré au droit d'un axe de rotation du maillon, et plus précisément sur l'axe de rotation arrière de ce maillon, en référence au sens de défilement F₂ de la chaîne 11 sur la roue de renvoi 12.

Ce picot 111 est également représenté, en vue agrandie et de côté, sur la figure 8(b).

Comme on peut le constater, il est proposé de déplacer le picot depuis le centre du maillon vers l'arrière de ce maillon, ce qui permet d'augmenter l'étendue de la zone de contre-appui et par suite, d'assurer une bonne pénétration des picots 111 dans la bande 20. Ceci est lié au fait que le moyen de contre-appui est une roue, en l'occurrence une roue de renvoi, et plus une plaque comme dans l'art antérieur.

De plus, pour s'assurer que l'angle d'attaque d'un picot dans la bande n'est pas trop éloigné de la perpendiculaire à cette bande, le demandeur propose de réduire la hauteur du picot. En pratique, la hauteur du picot est diminuée d'un facteur compris entre deux et trois par rapport à la hauteur d'un picot connu, par exemple illustré sur la figure 2.

Incidemment, la réduction de la hauteur du picot permet d'économiser de la matière dans la fabrication de la chaîne.

En variante, on pourrait conserver une hauteur de picot similaire aux picots existants.

## Revendications

1. Dispositif (1) de convoyage d'une bande (20), comprenant :
- un moyen d'appui (10) pour la bande (20) ;
- au moins une chaîne (11) munie de moyens (111) pour entraîner la bande (20) ;
- au moins une roue de renvoi (12) de la chaîne (11) pour amener la chaîne (11) en vis-à-vis de la bande (20) ;
dans lequel la roue de renvoi (12) forme également moyen de contre-appui de la chaîne (11) pour plaquer celle-ci contre le moyen d'appui (10) de sorte que les moyens (111) d'entraînement de la bande puissent pénétrer dans la bande (20) ; **caractérisé en ce que**,
le moyen d'appui (10) présente un axe de rotation, la roue de renvoi (12) étant disposée dans ce cas, par rapport au moyen d'appui (10), de sorte qu'il existe un décalage d positif, pris selon le sens de défilement de la bande, entre l'axe de rotation de la roue de renvoi (12) et l'axe de rotation du moyen d'appui (10),
ou **en ce que**
le moyen d'appui (10) est une plaque comprenant une face incurvée (102), une première face plane (101) en amont de la face incurvée (102), et une deuxième face plane (103) en aval de la face incurvée (102), lesdites faces planes (101, 103) étant inclinées l'une par rapport à l'autre, la roue de renvoi (12) étant disposée dans ce cas, par rapport à la plaque (10) formant moyen d'appui de la bande, de sorte qu'il existe un décalage d positif ou nul, pris selon le sens de défilement de la bande, entre l'axe de rotation de la roue de renvoi (12) et l'axe défini comme étant celui qui est à la fois perpendiculaire à l'axe de rotation de la roue de renvoi (12) et à la ligne de contact entre la face incurvée (102) de la plaque (10) et la face plane (103) située en aval de la face incurvée.

2. Dispositif de convoyage d'une bande selon la revendication 1, dans lequel le moyen d'appui (10) est un rouleau.

3. Dispositif de convoyage d'une bande selon l'une des revendications précédentes, dans lequel la roue de renvoi (12) est motorisée.

4. Dispositif de convoyage d'une bande selon l'une des revendications précédentes, dans lequel la chaîne à maillons (11) est une chaîne simple, double ou triple.

5. Dispositif de convoyage d'une bande selon l'une des revendications précédentes, dans lequel il est prévu une chaîne (11) de part et d'autre du moyen d'appui (10).

6. Dispositif de convoyage d'une bande selon l'une des revendications précédentes, dans lequel la chaîne (11) présente un pas compris entre 5mm et 80mm, le pas étant défini comme la distance séparant les deux axes de rotation d'un maillon de la chaîne.

7. Dispositif de convoyage d'une bande selon l'une des revendications précédentes, dans lequel les moyens (111) pour entraîner la bande sont des picots, chaque picot étant excentré au niveau de l'un des deux axes de rotation du maillon de chaîne sur lequel il est monté.

8. Dispositif de convoyage d'une bande selon l'une des revendications précédentes, dans lequel les moyens (111) pour entraîner la bande présentent une forme symétrique.

9. Dispositif de convoyage d'une bande selon l'une des revendications précédentes, dans lequel les moyens (111) pour entraîner la bande présentent chacun une hauteur inférieure à 10mm.

10. Ligne de fabrication de pots alimentaires, **caractérisée en ce qu'**elle comprend un dispositif selon l'une des revendications précédentes pour convoyer une bande, par exemple en matière plastique, destinée à former lesdits pots.

## Claims

1. System (1) for conveying a strip of material (20), comprising:
- a bearing means (10) for the strip of material (20);
- at least one chain (11) provided with means (111) for driving the strip of material (20);
- at least one return wheel (12) for the chain (11) to position the chain (11) facing the strip of material (20);
in which the return wheel (12), also forms a counter-bearing means for the chain (11), to press said chain against the bearing means (10) so that the means (111) of driving the strip of material can penetrate into the strip of material (20);
**characterized in that**
the bearing means (10) have a rotation axis, the return wheel (12) being arranged **in that** case, relative to the bearing means (10), so that there is a positive offset d, taken in the direction of movement of the strip of material, between the rotation axis of the return wheel (12) and the rotation axis of the bearing means (10),
or **in that**
the bearing means (10) is a plate comprising an incurved face (102), a first planar face (101) upstream of the incurved face (102), and a second planar face (103) downstream of the incurved face (102), said planar faces (101, 103) being inclined relative to one another, the return wheel (12) is arranged, relative to the plate (10) forming the bearing means for the strip of material, so that there is a positive or zero offset d, taken in the direction of movement of the strip of material, between the rotation axis of the return wheel (12) and the axis defined as that which is perpendicular to both the rotation axis of the return wheel (12) and to the line of contact between the incurved face (102) of the plate (10) and the planar face (103) situated downstream of the incurved face.

2. System for conveying a strip of material according to Claim 1, in which the bearing means (10) is a roll.

3. System for conveying a strip of material according to one of the preceding claims, in which the return wheel (12) is motor-driven.

4. System for conveying a strip of material according to one of the preceding claims, in which the link chain (11) is a single, double or triple chain.

5. System for conveying a strip of material according to one of the preceding claims, in which a chain (11) is provided either side of the bearing means (10).

6. System for conveying a strip of material according to one of the preceding claims, in which the chain (11) has a pitch of between 5 mm and 80 mm, the pitch being defined as the distance separating the two rotation axes of a link of the chain.

7. System for conveying a strip of material according to one of the preceding claims, in which the means (111) for driving the strip of material are spikes, each spike being off-centre on one of the two rotation axes of the chain link on which it is mounted.

8. System for conveying a strip of material according to one of the preceding claims, in which the means (111) for driving the strip of material have a symmetrical shape.

9. System for conveying a strip of material according to one of the preceding claims, in which the means (111) for driving the strip of material each have a height of less than 10 mm.

10. Food pot production line, **characterized in that** it comprises a system according to one of the preceding claims for conveying a strip of material, for example a plastic material, intended to form said pots.

## Patentansprüche

1. Vorrichtung (1) zum Befördern eines Bandes (20), umfassend:
- ein Anlagemittel (10) für das Band (20),
- wenigstens eine Kette (11), die mit Mitteln (111) zum Antreiben des Bandes (20) ausgestattet ist,
- wenigstens ein Rad zum Umlenken (12) der Kette (11), um die Kette (11) gegenüber dem Band (20) zu führen,
wobei das Umlenkrad (12) auch ein Gegenanlagemittel der Kette (11) bildet, um diese gegen das Anlagemittel (10) zu drücken, so dass die Mittel (111) zum Antreiben des Bandes in das Band (20) eindringen können,
**dadurch gekennzeichnet, dass**
das Anlagemittel (10) eine Rotationsachse aufweist, wobei das Umlenkrad (12) in diesem Fall gegenüber dem Anlagemittel (10) derart angeordnet ist, dass zwischen der Rotationsachse des Umlenkrades (12) und der Rotationsachse des Anlagemittels (10) - entlang der Laufrichtung des Bandes betrachtet - ein positiver Versatz d vorhanden ist,
oderdass
das Anlagemittel (10) eine Platte ist, die eine gekrümmte Fläche (102), eine erste ebene Fläche (101) vor der gekrümmten Fläche (102) sowie eine zweite ebene Fläche (103) nach der gekrümmten Fläche (102) umfasst, wobei die ebenen Flächen (101, 103) einander gegenüber geneigt sind, wobei das Umlenkrad (12) in diesem Fall gegenüber der das Anlagemittel des Bandes bildenden Platte (10) derart angeordnet ist, dass zwischen der Rotationsachse des Umlenkrades (12) und der Achse, welche als diejenige definiert ist, die sowohl zu der Rotationsachse des Umlenkrades (12) als auch zu der Berührungslinie zwischen der gekrümmten Fläche (102) der Platte (10) und der nach der gekrümmten Fläche gelegenen ebenen Fläche (103) senkrecht verläuft, - entlang der Laufrichtung des Bandes betrachtet - ein positiver oder Null-Versatz d vorhanden ist.

2. Vorrichtung zum Befördern eines Bandes nach Anspruch 1, wobei das Anlagemittel (10) eine Rolle ist.

3. Vorrichtung zum Befördern eines Bandes nach einem der vorhergehenden Ansprüche, wobei das Umlenkrad (12) motorisiert ist.

4. Vorrichtung zum Befördern eines Bandes nach einem der vorhergehenden Ansprüche, wobei die Gliederkette (11) eine Einfach-, Doppel- oder Dreifachkette ist.

5. Vorrichtung zum Befördern eines Bandes nach einem der vorhergehenden Ansprüche, wobei auf beiden Seiten des Anlagemittels (10) eine Kette (11) vorgesehen ist.

6. Vorrichtung zum Befördern eines Bandes nach einem der vorhergehenden Ansprüche, wobei die Kette (11) eine Teilung im Bereich zwischen 5 mm und 80 mm aufweist, wobei die Teilung als der Abstand zwischen den beiden Rotationsachsen eines Gliedes der Kette definiert ist.

7. Vorrichtung zum Befördern eines Bandes nach einem der vorhergehenden Ansprüche, wobei die Mittel (111) zum Antreiben des Bandes Zacken sind, wobei jeder Zacken im Bereich von einer der beiden Rotationsachsen des Kettengliedes, an dem er angebracht ist, exzentrisch angeordnet ist.

8. Vorrichtung zum Befördern eines Bandes nach einem der vorhergehenden Ansprüche, wobei die Mittel (111) zum Antreiben des Bandes eine symmetrische Form aufweisen.

9. Vorrichtung zum Befördern eines Bandes nach einem der vorhergehenden Ansprüche, wobei die Mittel (111) zum Antreiben des Bandes jeweils eine Höhe von unter 10 mm aufweisen.

10. Linie zur Herstellung von Lebensmittelgefäßen, **dadurch gekennzeichnet, dass** sie eine Vorrichtung nach einem der vorhergehenden Ansprüche zum Befördern eines Bandes, beispielsweise aus Kunststoff, das dazu bestimmt ist, die Gefäße zu bilden, umfasst.
